# EUROPEAN PATENT APPLICATION

(11) **EP 1 841 109 A1**
(43) Date of publication of application: **03.10.2007**
(21) Application number: 06253681.8
(22) Date of filing: 13.07.2006
(51) Int. Cl.: H04H 9/00

(54) **Display/response system, apparatus and program storage medium**

(30) Priority: 28.03.2006 JP 2006087757
(71) Applicant: Fujitsu Ltd., Kawasaki-shi, Kanagawa 211-8588 (JP)
(72) Inventor: Mitsui, Hisafumi, c/o Fujitsu Limited, Kawasaki-shi, Kanagawa 211-8588 (JP)
(74) Representative: Hitching, Peter Matthew

(57) **Abstract**

A display/response system includes a display/response apparatus and a display apparatus. A show and a questionnaire are received by the display/response apparatus (20), and the show is immediately displayed on the display/response apparatus. The questionnaire is sent to the display apparatus (30) and displayed on the display apparatus. In the display/response apparatus, a response to the questionnaire displayed on the display apparatus is determined in response to an operation, and the determined response is sent to a predetermined response collection apparatus (11).

## Description

### BACKGROUND OF THE INVENTION

### Field of the Invention

The present invention relates to a display/response system for displaying a show and a questionnaire which have been distributed and for responding to the questionnaire, a display/response apparatus and a display/response program storage medium.

### Description of the Related Art

In the field of broadcasting, analog broadcasting has been conventionally common in which information about a show, such as voices, picture colors and picture brightness, is converted to electrical signals, and the electrical signals are analog-modulated and delivered. Recently, in addition to the analog broadcasting, digital broadcasting is widely known in which pictures and voices of a show are encoded to bit strings configured by 0s and 1s and compressed, and a compressed digital signal is digitally modulated and delivered. The digital broadcasting has widening applications such as digital terrestrial broadcasting utilizing ground waves similar to those used in the conventional analog broadcasting, digital satellite broadcasting utilizing various satellites, and digital wire broadcasting utilizing a cable. Such digital broadcasting has advantages that it is possible to respond to multi-channelization because of its high frequency utilization efficiency and that it is possible to broadcast a high-quality image because of its high-resistance to noise or deformation.

Another advantage of digital broadcasting is that it is possible to deliver, in addition to pictures and voices of a show, additional information such as a questionnaire together and therefore, bidirectional communication is possible in which a user who watches a show can not only receive the delivered show but also return a response to a questionnaire about the show.

As a method for realizing the bidirectional communication, there are known a method in which a URL of a questionnaire site is cut from additional information delivered together with a show, and the questionnaire site is accessed based on the URL by means of a personal computer or the like to respond to a questionnaire (for example, see Japanese Patent Laid-Open No. 2002-125161), a method in which a TV is connected to a communication network to acquire a questionnaire itself together with a show, and a TV remote controller and the like are used to respond to the questionnaire and return it via the communication network, and the like.

Recently, an antenna or a TV tuner for receiving TV waves is incorporated in a personal computer, and it is increasingly common to watch a TV show with the use of a personal computer. Furthermore, free delivery of a show exclusively for a personal computer via an Internet line is gradually performed, and it is expected that the number of users who use a personal computer instead of a TV will further increase. Thus, in a personal computer connected to an Internet line, the bidirectional communication described above can be easily realized because a TV and a communication device are integrated therein. Furthermore, though only a simple response such as a numeric can be inputted in the case of responding to a questionnaire with the use of an ordinary TV remote controller, it is possible to, by using a TV-incorporatedpersonal computer, easily input a long sentence with the use of a mouse or a keyboard, and thereby it is possible to communicate a user's desire to a provider of a show certainly.

However, in the case of responding to a questionnaire with the use of a TV-incorporated personal computer, a questionnaire is displayed superimposed on a displayed show, or a show is displayed in a small size, which makes it uncomfortable for a user to watch the show and to respond to the questionnaire while watching the show.

### SUMMARY OF THE INVENTION

In consideration of the above situation, the present invention provides a display/response system which makes it possible to easily input a response to a questionnaire while watching a show.

The present invention provides a display/response system having a display/response apparatus and a display apparatus,
the display/response apparatus including:
a show receiving section which receives a show delivered from a delivery station;
a questionnaire receiving section which receives questionnaire information about the show delivered together with the show during delivery of the show;
a show display section which displays the show received by the show receiving section;
a questionnaire sending section which sends the questionnaire information received by the questionnaire receiving section to the display apparatus and causes the display apparatus to display a questionnaire screen configured by the questionnaire information;
a response section which determines a response to a questionnaire shown on the questionnaire screen displayed on the display apparatus, in response to an operation; and
a response sending section which sends the response determined by the response section to a predetermined response collection apparatus; and
the display apparatus including:
   a questionnaire receiving section which receives the questionnaire information sent from the display/response apparatus; and
   a questionnaire display section which displays the questionnaire screen indicated by the questionnaire information received by the questionnaire receiving section.

In the display/response system of the present invention, a show received by the display/response apparatus is immediately displayed on the display/response apparatus, and a questionnaire is sent to the display apparatus and displayed on the display apparatus. When a response to the questionnaire is determined by a user watching the show with the use of the operating tool of the display response apparatus, the response is returned to the response collection apparatus. According to the display/response system of the present invention, a show and a questionnaire are displayed on different screens, which enables inputting a response to a questionnaire while watching a show.

In the display/response system of the present invention, it is preferable that the display/response apparatus is a tuner-incorporated personal computer.

In general, a personal computer is often connected to an Internet line or the like. Therefore, by utilizing it as the display/response apparatus of the present invention, it is possible to return a response to a questionnaire without causing the trouble or additional cost for newly establishing a connection with a communication network. Furthermore, a user who watches a show can easily input even a long sentence with the use of the mouse or the keyboard of a personal computer friendly to the user, and a provider of a show can certainly acquire detailed information such as impression of the show from the user.

In the display/response system of the present invention, it is preferable that the questionnaire sending section of the display/response apparatus sends the questionnaire information to the display apparatus via a communication pathway without intervention of other apparatuses, that the response sending section of the display/response apparatus performs sending to the predetermined response collection apparatus via a communication network, and that the questionnaire receiving section of the display apparatus receives the questionnaire information from the display/response apparatus via the communication pathway.

Thus, connecting the display/response apparatus and the display apparatus with a communication pathway without intervention of other apparatuses eliminates the necessity to connect the display apparatus to a communication network, and thereby a provider fee or a connection cost.

Furthermore, the present invention provides a display/response apparatus including:
a show receiving section which receives a show delivered from a delivery station;
a questionnaire receiving section which receives questionnaire information about the show delivered together with the show during delivery of the show;
a show display section which displays the show received by the show receiving section;
a questionnaire sending section which sends the questionnaire information received by the questionnaire receiving section to a predetermined display apparatus and causes the display apparatus to display a questionnaire screen configured by the questionnaire information;
a response section which determines a response to a questionnaire shown on the questionnaire screen displayed on the display apparatus, in response to an operation; and
a response sending section which sends the response determined by the response section to a predetermined response collection apparatus.

The display/response apparatus of the present invention has the same function of the display/response apparatus of the display/response system described above, and the operation and the advantages thereof are also the same as described above.

Additionally, the present invention provides a display/response program storage medium in which a display/response program to be executed in a computer is stored, the display/response program causing the computer to implement:
a show receiving section which receives a show delivered from a delivery station;
a questionnaire receiving section which receives questionnaire information about the show delivered together with the show during delivery of the show;
a show display section which displays the show received by the show receiving section;
a questionnaire sending section which sends the questionnaire information received by the questionnaire receiving section to a predetermined display apparatus and causes the display apparatus to display a questionnaire screen configured by the questionnaire information;
a response section which determines a response to a questionnaire shown on the questionnaire screen displayed on the display apparatus, in response to an operation; and
a response sending section which sends the response determined by the response section to a predetermined response collection apparatus.

As mentioned above, according to the display/response program storage medium of the present invention, it is possible to easily input a response to a questionnaire while watching a show.

### BRIEF DESCRIPTION OF THE DRAWINGS

Fig. 1 is a schematic block diagram of a show delivery system according to an embodiment of the present invention;
Fig. 2 is an internal block diagram of a personal computer;
Fig. 3 is an internal block diagram of a TV;
Fig. 4 is a flowchart showing the flow of a sequence of processings from receiving a show and a questionnaire to returning a response to the questionnaire;
Fig. 5 (A) and Fig. 5 (B) show images to be displayed on the display screen of the personal computer; and
Fig. 6 shows a questionnaire screen to be displayed on the display screen of the TV.

### DETAILED DESCRIPTION OF THE INVENTION

An embodiment of the present invention will be described below with reference to drawings.

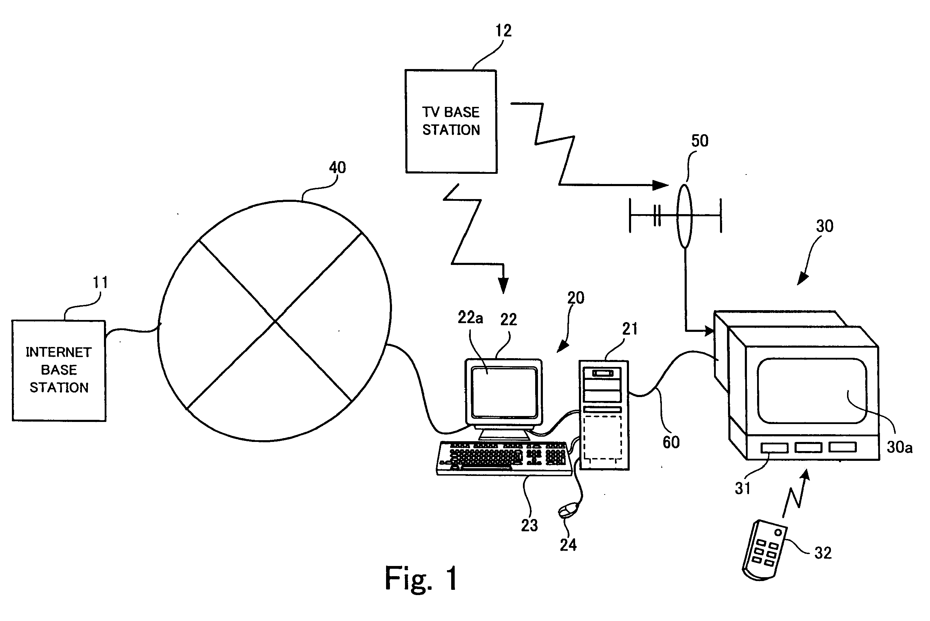

Fig. 1 is a schematic block diagram of a show delivery system to which an embodiment of the present invention is applied.

This show delivery system is a system enabling bidirectional communication in which a show and questionnaire information indicating a questionnaire about the show are delivered from a provider that delivers the show, and a user who watches the show receives the show and the questionnaire information and returns a response to the questionnaire to the provider. The show delivery system is configured by a TV base station 12 which delivers a show, a TV 30 which receives the show, a personal computer 20 which receives the show and returns a response to a questionnaire about the show, and an Internet base station 11 which collects responses to the questionnaire. Though the show delivery system is actually configured by a lot of connected base stations, personal computers and TVs, Fig. 1 shows only such components as are required for description of the present invention.

The TV base station 12 integrates, as show information, digital picture information indicating pictures of a show, digital voice information indicating voices of the show, additional information including a questionnaire about the show, and the like, compresses and digitally modulates the show information and transmits it as electrical waves. And thereby, the show and questionnaire information are delivered. The TV base station 12 corresponds to an example of "a delivery station" stated in the present invention.

The Internet base station 11 collects responses to a questionnaire about a show via an Internet line 40. The Internet base station 11 corresponds to an example of "a response collection apparatus" stated in the present invention.

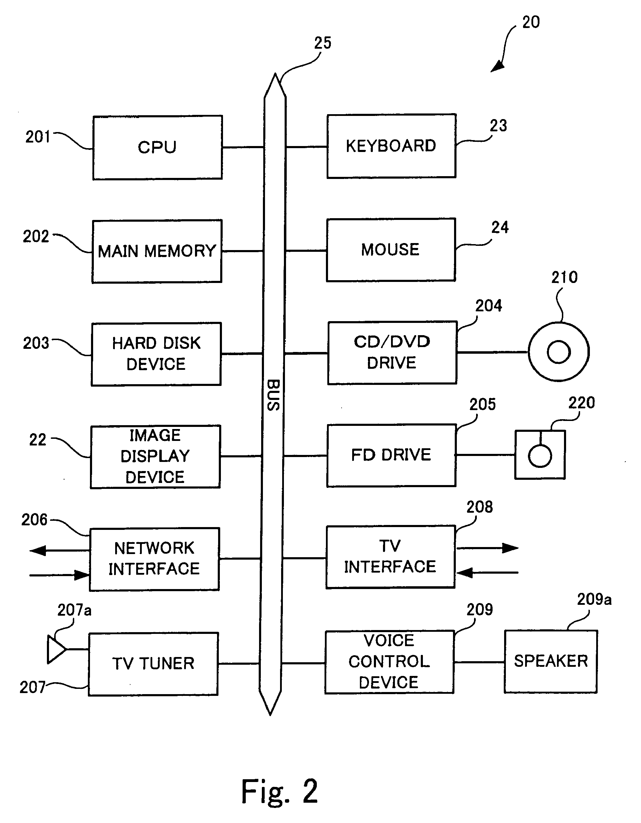

The personal computer 20 is a tuner-incorporated personal computer which is provided with an antenna or a TV tuner (see Fig. 2) for receiving a show or questionnaire information delivered from the TV base station 12. The personal computer 20 is connected to the TV 30 via a USB cable 60, and it sends a questionnaire added to a show to the TV 30 via the USB cable 60. This personal computer 20 is connected to the Internet line 40 and returns a response to the questionnaire to the Internet base station 11 via the Internet line 40. The personal computer 20 corresponds to an example of "a display/response apparatus" stated in the present invention, and the USB cable 60 corresponds to an example of "a communication pathway without intervention of other apparatuses" stated in the present invention.

When seen from the external configuration, the personal computer 20 is provided with a main device 21, an image display device 22 for displaying an image on a display screen 22a in response to an instruction from the main device 21, a speaker for outputting voices (see Fig. 2), a keyboard 23 for inputting various information corresponding to a key operation into the main device 21, and a mouse 24 for, by specifying any position on the display screen 22a, inputting an instruction corresponding to what is displayed at the position, for example, an icon.

Fig. 2 is an internal block diagram of the personal computer 20.

Inside the main device 21, as shown in Fig. 2, there are included a CPU 201 which executes various programs including the display/response program of the present invention, a main memory 202 on which a program stored in a hard disk device 203 is read and developed to be executed by the CPU 201, the hard disk device 203 in which various programs and the like are stored, a CD/DVD drive 204 in which a CD-ROM 210 or a DVD is to be mounted and which accesses the mounted CD-ROM 210 or DVD, an FD drive 205 in which an FD 220 is to be mounted and which accesses the mounted FD 220, an antenna 207a which receives a show or a questionnaire delivered from the TV base station 12 shown in Fig. 1, a TV tuner 207 which selects an electrical wave of a channel selected by a user from among electrical waves received by the antenna 207a and converts the selected electrical wave to the digital show information described above, a network interface 206 which returns a response to a questionnaire to the Internet base station 11 shown in Fig. 1 via the Internet line 40, a TV interface 208 which sends a questionnaire to the TV 30 with the use of the USB cable 60 in Fig. 1, a voice control device 209 which converts a voice signal of a show to an analog signal and sends it to a speaker 209a, and the like. These various components and the image display device 22, the keyboard 23 and the mouse 24 which are also shown in Fig. 1 are mutually connected via a bus 25. Combination of antenna 207a and the TV tuner 207 corresponds to an example of "a show receiving section" stated in the present invention and "a questionnaire receiving section of the display/response apparatus" stated in the present invention, and the network interface 206 corresponds to an example of "a response sending section" stated in the present invention. The image display device 22 corresponds to an example of "a show display section" stated in the present invention, the TV interface 208 corresponds to an example of "a questionnaire sending section" stated in the present invention, and the keyboard 23 and the mouse 24 correspond to an example of "a response section" stated in the present invention.

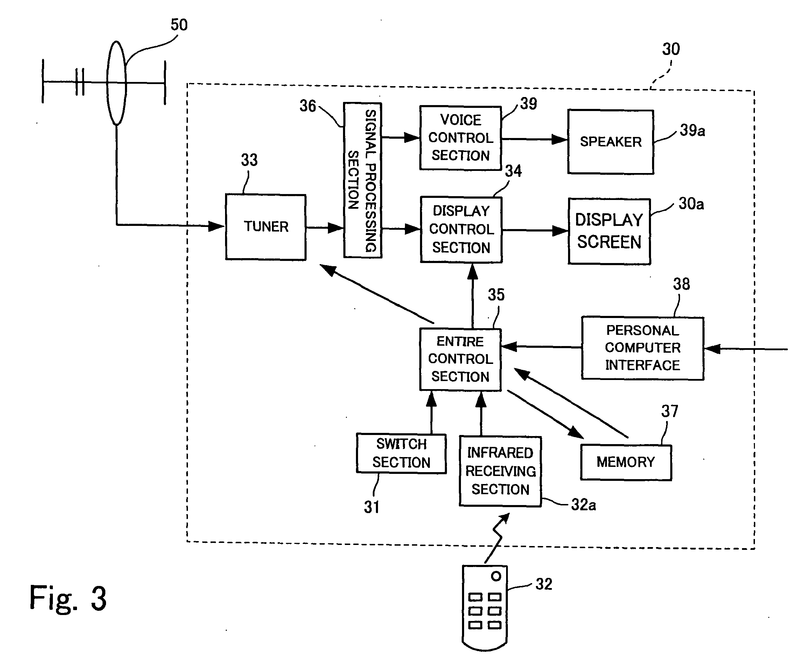

A show or a questionnaire delivered from the TV base station 12 shown in Fig. 1 is also received by the TV 30. When seen from the external configuration, the TV 30 is provided with a display screen 30a for displaying a show or a questionnaire, a switch 31 for operating the power source or the channels of the TV 30, the speaker 209a for outputting voices, and the like (see Fig. 3). There is also provided a remote controller 32 for remotely operating the switch 31 from the point of the user's hand with the use of an infrared ray. The TV 30 corresponds to an example of "a display apparatus" stated in the present invention.

Fig. 3 is an internal block diagram of the TV 30.

Inside the TV 30, as shown in Fig. 3, there are provided a tuner 33 which selects an electrical wave of a channel selected by a user from among electrical waves received by the antenna 50 and converts the selected electrical wave to the digital show information described above, a signal processing section 36 which expands the compressed show information and extracts picture information, voice information and additional information from the expanded show information, a display control section 34 which converts a questionnaire or digital picture information to an analog signal and sends it to the display screen 30a, a voice control section 39 which converts a voice signal to an analog signal and sends it to a speaker 39a, an entire control section 35 which controls the entire TV 30, an infrared receiving section 32a which receives an infrared ray emitted from the remote controller 32, a memory 37 in which various information for controlling the entire TV 30 is stored, a personal computer interface 38 which receives a questionnaire from the personal computer 20, the display screen 30a, the switch 31 and the remote controller 32 which are also shown in Fig. 1. The personal computer interface 38 corresponds to an example of "a questionnaire receiving section of the display apparatus" stated in the present invention, and combination of the display control section 34 and the display screen 30a corresponds to an example of "a questionnaire display section" stated in the present invention.

The show delivery system shown in Fig. 1 is basically configured as described above.

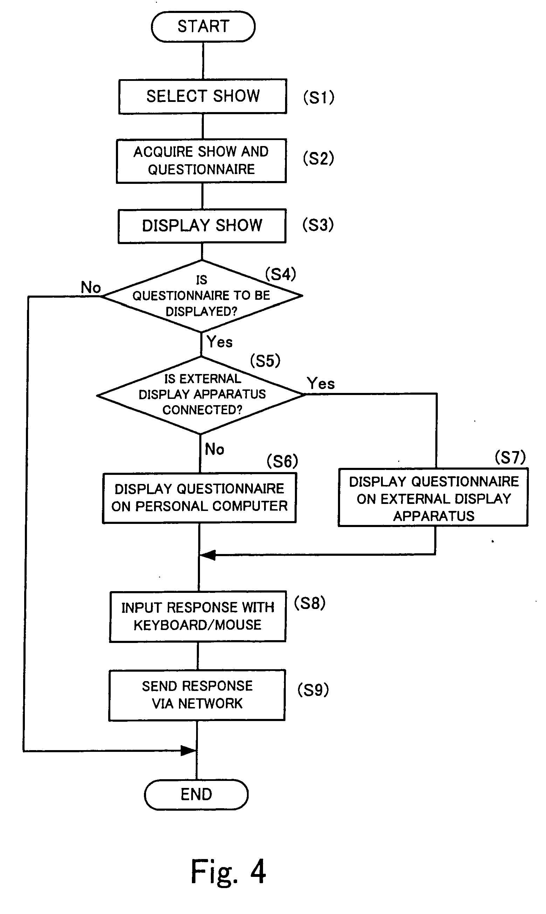

Fig. 4 is a flowchart showing the flow of a sequence of processings from receiving a show and questionnaire information from the TV base station 12 to sending a response to a questionnaire indicated by the questionnaire information to the Internet base station 11.

Description will be made below in accordance with the flowchart in Fig. 4, referring to Fig. 1 and Fig. 2.

In this embodiment, though both of the personal computer 20 and the TV 30 are provided with a function of receiving and displaying a show and a questionnaire, the TV 30 cannot return a response to the questionnaire because it is not connected to the Internet line 40. Therefore, a user is to watch the show not with the TV 30, but with the personal computer 20, about which the user wants to respond to a questionnaire.

When the user selects a TV channel with the use of the keyboard 23 or the mouse 24 of the personal computer 20 (step S1 in Fig. 4), the selected channel is communicated to the TV tuner 207 of the personal computer 20 via the CPU 201.

The electrical waves received by antenna 207a are communicated to the TV tuner 207. The TV tuner 207 selects an electrical wave of the channel communicated by the CPU 201 and converts the selected electrical wave to the digital show information described above. The converted show information is communicated to the CPU 201.

At the CPU 201, the compressed show information is expanded first. This expanded show information is a packet aggregate configured by data strings called TS (transport stream), and consisting of picture information, voice information, additional information, multiple tables for associating pictures, voices and questionnaires with one another, and the like. In this embodiment, a show number for identifying a show and a type number for identifying the type of the information (picture, voice or additional information) are added to each information included in the TS packet. Correspondence relation between a show and a show number (for example, show_1: PID (show number) "1"; show_2: PID "2", ...) is defined in a PAT (program association table) included in the TS packet, and correspondence relation between an identification number and an information type (for example, picture information: SID (type number) "1", voice information: SID "2", and additional information: SID "3") is defined in a PMT (program map table) prepared for each show. That is, at the CPU 201, information added with the same PID (show number) in the TS packet is acquired, and subsequently, by the SID (type number) added to each of the information being identified, picture information, voice information and additional information constituting the same show are extracted (step S2 in Fig. 4). The extracted picture information is communicated to the image display device 22, and the voice information is communicated to the voice control device 209.

When the picture information and the voice information are extracted, a picture of the show indicated by the picture information is displayed on the display screen 22a by the image display device 22 (step S3 in Fig. 4), and voices of the show indicated by the voice information are emitted from the speaker 209a by the voice control device 209.

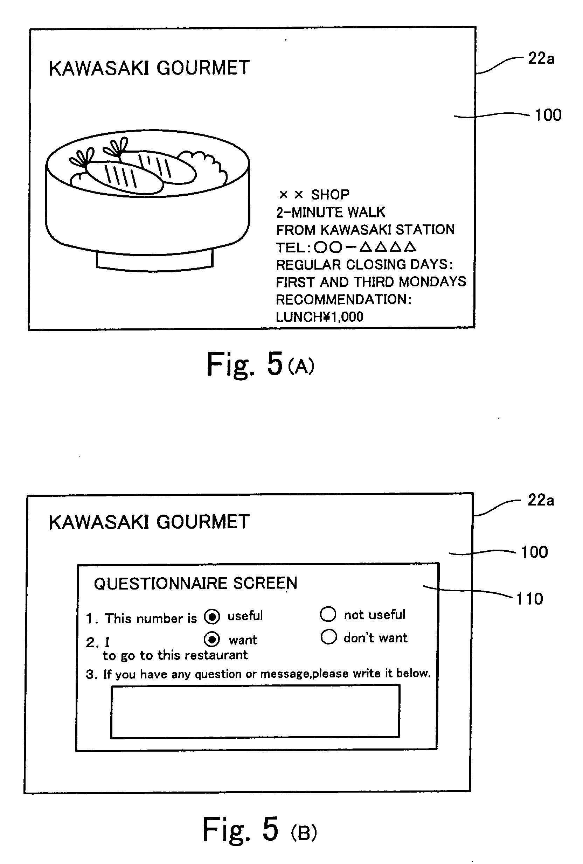

Fig. 5 (A) and Fig. 5 (B) show images to be displayed on the display screen 22a of the personal computer 20.

At step S3 in Fig. 4, a picture 100 of a show is displayed on the display screen 22a of the personal computer 20 as shown in Fig. 5 (A) .

When the user watches a show with the personal computer 20 and instructs display of a questionnaire with the use of the mouse 24 or the like (step S4 in Fig. 4: Yes), the content of the instruction is communicated to the CPU 201. The CPU 201 detects whether or not the TV 30 is connected to the personal computer 20 via the TV interface 208 (step S5 in Fig. 4).

If the TV 30 is not connected (step S5 in Fig. 4: No), then the CPU 201 sends additional information to the image display device 22 and displays a questionnaire on the display screen 22a (step S6 in Fig. 4).

At step S6 in Fig. 4, a questionnaire screen 110 is displayed on the display screen 22a of the personal computer 20, being superimposed on the picture 100 of the show as shown in Fig. 5(B).

The user confirms the picture 100 of the show and the questionnaire screen 110 shown in Fig. 5(B), and inputs a response with the use of the mouse 24 or the keyboard 23 in accordance with the questionnaire screen 110 (step S8 in Fig. 4). The inputted response is communicated to the CPU 201, then communicated to the network interface 206, and returned to the base station 11 via the communication network 40 (step S9 in Fig. 4).

Here, on the display screen 22a shown in Fig. 5 (B), the questionnaire screen 110 is displayed superimposed on the picture 100 of the show, and therefore, the user cannot respond to the questionnaire while watching the picture 100 of the show. In the show delivery system of this embodiment, a questionnaire is displayed on the TV 30, and a response to the questionnaire is inputted with the use of the mouse 24 or the keyboard 23 of the personal computer 20. And thereby, the user interface is improved.

If the TV 30 is connected at step S5 in Fig. 4 (step S5 in Fig. 4: Yes), then the CPU 201 communicates the additional information to the TV interface 208. The TV interface 208 sends the additional information to the TV 30 via the USB cable 60.

At the personal computer interface 38 of the TV 30 shown in Fig. 3, the additional information sent from the personal computer 20 is received. The received additional information is communicated to the entire control section 35 and then communicated to the display control section 34. As a result, the questionnaire included in the additional information is displayed on the display screen 30a of the TV 30 (step S7 in Fig. 4).

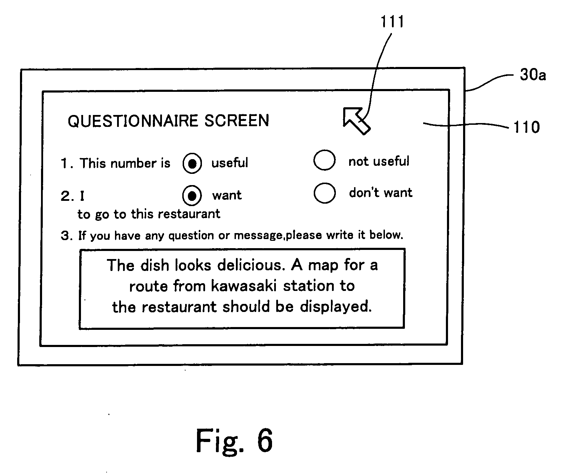

Fig. 6 shows a questionnaire screen to be displayed on the display screen 30a of the TV 30.

The questionnaire screen 110 and a pointer 111 are displayed on the display screen 30a. When the user moves the mouse 24, position information about the mouse 24 is sent from the personal computer 20 to the TV 30 via the USB cable 60, and the position of the pointer 111 on the questionnaire screen 110 is moved to a position corresponding to the position information. When the user inputs a character with the use of the keyboard 23, the inputted character information is sent to the TV 30, and the inputted character is displayed on the questionnaire screen 110. Such processing can be easily realized by utilizing a multi-monitor function (a function of displaying different information on each display device) which is an existing technique for a personal computer.

The user responds to a questionnaire in accordance with the questionnaire screen 110 displayed on the TV 30 (step S8 in Fig. 4). The inputted response is communicated from the mouse 24 or the keyboard 23 to the CPU 201, communicated to the network interface 206 by the CPU 201, and sent from the network interface 206 to the Internet base station 11 via the Internet line 40 (step S9 in Fig. 4).

As described above, by a questionnaire being displayed on the TV 30, a user can respond to the questionnaire displayed on the TV 30 while watching the picture 100 of a show displayed on the personal computer 20 shown in Fig. 5 (A) . Furthermore, since the user can use the keyboard 23 or the mouse 24 friendly to the user, he can easily input even a long sentence.

According to this embodiment, it is not necessary to connect the TV 30 which displays a questionnaire itself to a communication network. Therefore, the user can easily respond to a questionnaire without an additional communication cost or provider fee, and a provider of a show can enhance the user's willingness to respond to a questionnaire and thereby obtain more accurate information certainly.

Though description has been made on a show delivery system provided with a TV and a personal computer, the display/response apparatus or the display apparatus stated in the present invention may be a mobile phone. Furthermore, for example, in the case of a TV-incorporatedpersonal computer provided with multiple image display devices, it is also possible to use the body device of the personal computer and one image display device as the display/response apparatus of the present invention and use the remaining image display devices as the display apparatus of the present invention.

Though description has been made on an example in which a TV and a personal computer are connected via a USB cable, the "communication pathway without intervention of other apparatuses" stated in the present invention may be a wireless communication pathway, for example, by means of an infrared ray or Bluetooth (registered trademark).

## Claims

1. A display/response system comprising a display/response apparatus and a display apparatus,
the display/response apparatus comprising:
a show receiving section which receives a show delivered from a delivery station;
a questionnaire receiving section which receives questionnaire information about the show delivered together with the show during delivery of the show;
a show display section which displays the show received by the show receiving section;
a questionnaire sending section which sends the questionnaire information received by the questionnaire receiving section to the display apparatus and causes the display apparatus to display a questionnaire screen configured by the questionnaire information;
a response section which determines a response to a questionnaire shown on the questionnaire screen displayed on the display apparatus, in response to an operation; and
a response sending section which sends the response determined by the response section to a predetermined response collection apparatus; and
the display apparatus comprising:
a questionnaire receiving section which receives the questionnaire information sent from the display/response apparatus; and
a questionnaire display section which displays the questionnaire screen indicated by the questionnaire information received by the questionnaire receiving section.

2. The display/response system according to claim 1, wherein the display/response apparatus is a tuner-incorporated personal computer.

3. The display/response system according to claim 1, wherein the questionnaire sending section of the display/response apparatus sends the questionnaire information to the display apparatus via a communication pathway without intervention of other apparatuses, the response sending section of the display/response apparatus performs sending to the predetermined response collection apparatus via a communication network, and the questionnaire receiving section of the display apparatus receives the questionnaire information from the display/response apparatus via the communication pathway.

4. A display/response apparatus comprising:
a show receiving section which receives a show delivered from a delivery station;
a questionnaire receiving section which receives questionnaire information about the show delivered together with the show during delivery of the show;
a show display section which displays the show received by the show receiving section;
a questionnaire sending section which sends the questionnaire information received by the questionnaire receiving section to a predetermined display apparatus and causes the display apparatus to display a questionnaire screen configured by the questionnaire information;
a response section which determines a response to a questionnaire shown on the questionnaire screen displayed on the display apparatus, in response to an operation; and
a response sending section which sends the response determined by the response section to a predetermined response collection apparatus.

5. A display/response program storage medium in which a display/response program to be executed in a computer is stored, the display/response program causing the computer to implement:
a show receiving section which receives a show delivered from a delivery station;
a questionnaire receiving section which receives questionnaire information about the show delivered together with the show during delivery of the show;
a show display section which displays the show received by the show receiving section;
a questionnaire sending section which sends the questionnaire information received by the questionnaire receiving section to a predetermined display apparatus and causes the display apparatus to display a questionnaire screen configured by the questionnaire information;
a response section which determines a response to a questionnaire shown on the questionnaire screen displayed on the display apparatus, in response to an operation; and
a response sending section which sends the response determined by the response section to a predetermined response collection apparatus.
